# EUROPÄISCHE PATENTANMELDUNG

(11) **EP 0 656 282 A1**
(43) Veröffentlichungstag der Anmeldung: **07.06.1995**
(21) Anmeldenummer: 94117895.6
(22) Anmeldetag: 12.11.1994
(51) Int. Cl.: B60R 13/06

(54) **Dichtungs- oder Deckprofil**

(30) Priorität: 24.11.1993 DE 4339944
(71) Anmelder: Continental Aktiengesellschaft, D-30165 Hannover (DE)
(72) Erfinder: Ehrlich, Lutz, D-31618 Liebenau (DE)

(57) **Zusammenfassung**

Die Erfindung betrifft ein aus polymeren Werkstoffen gebildetes Dichtungs- oder Deckprofil, das einen auf einen Flansch aufsteckbaren oder in einer Nut einsteckbaren, an dem Flansch bzw. in der Nut durch transversale Klemmkräfte fixierbaren Befestigungsteil aufweist. Es ist besonders leicht montierbar dadurch, daß es ganz oder teilweise aus einem an sich bekannten thermoplastischen polymeren Werkstoff mit sogenanntem Formgedächtnis besteht und nach seiner ursprünglichen, annähernd der bestimmungsgemäßen Gebrauchsform entsprechenden Formgebung erwärmt und ganz oder teilweise reversibel so verformt und durch Abkühlung eingefroren ist, daß es mit geringem Kraftaufwand eingebaut werden kann. Nach dem Einbau wird das erfindungsgemäße Profil erneut erwärmt, und hierdurch formt es sich infolge und nach Maßgabe des Formgedächtnisses zurück, wodurch eine sichere form- und/oder kraftschlüssige Klemmbefestigung erzeugt wird.

## Beschreibung

Die Erfindung betrifft ein Dichtungs- oder Deckprofil gemäß dem Oberbegriff des Patentanspruchs 1.

Derartige Profile werden in großem Umfang - insbesondere in Kraftfahrzeugen - als Dichtungen für Türen, Fenster und andere Öffnungen sowie als Kantenschutz, Fugenfüller und Zierleisten eingesetzt. Sie weisen im allgemeinen einen ihrer Befestigung dienenden Fußteil und häufig einen, insbesondere Dichtungs- oder oder Abdeckfunktionen erfüllenden Kopfteil auf. Sie werden im allgemeinen durch Auf- oder Einstecken ihres Befestigungsteil auf einen Flansch bzw. in eine Nut in ihrer bestimmungsgemäßen Position fixiert, wo sie durch transversale gegen die Flansch-bzw. Nutwandung gerichtete elastische Klemmkräfte festgehalten werden. Diese Klemmkräfte beruhen auf der Rückstellelastizität des bei der Montage elastisch verformten Befestigungsteils bzw. seitlich am Befestigungsteil angeordneter Klemmlippen.

Bezüglich der Größe der Klemmkräfte ergeben sich dabei zwei einander widersprechende Forderungen:
Einerseits soll bei der Montage das Auf- bzw. Einstecken des Befestigungsteils auf einen Flansch bzw. in eine Nut einen möglichst geringen Kraftaufwand erfordern, und andererseits muß die Klemmkraft, durch die das montierte Profil in seiner Position gehalten wird, möglichst groß sein.

Um hier nicht auf u. U. unbefriedigende Kompromißlösungen angewiesen zu sein, ist z.B. in der DE-A-2 842 207 vorgeschlagen worden bei einem Steckprofil mit U-förmigem eine metallische Verstärkung enthaltendem Befestigungsteil letzteres mit auseinander gespreizten U-Schenkeln herzustellen und die U-Schenkel erst nach der leichten Montage des Profils an dem dafür vorgesehenen Halteflansch mit Hilfe einer geeigneten Anrollvorrichtung so zusammenzubiegen, daß sie den Halteflansch kraft- und/oder formschlüssig fest und sicher zwischen sich einklemmen.

Die hierfür bisher bekannt gewordenen Anrollvorrichtungen sind jedoch konstruktiv aufwendig und, insbesondere wegen ihres verhältnismäßig hohen Gewichts, schwierig handhabbar.

Es stellte sich daher die Aufgabe, ein leicht montierbares Profil zu schaffen, das mit geringem Kraftaufwand an einem Flansch oder in einer Nut montierbar ist und das ohne Verwendung einer mechanischen Biege- bzw. Anrollvorrichtung durch transversale Klemmwirkung seines Befestigungsteils fest und sicher an dem Flansch bzw. in der Nut fixiert werden kann.

Diese Aufgabe wird erfindungsgemäß durch ein Profil der eingangs genannten Art gelöst, das die im kennzeichnenden Teil des Patentanspruchs 1 angegebenen Merkmale aufweist. In den Unteransprüchen sind vorteilhafte Ausführungsformen und Weiterbildungen der Erfindung gekennzeichnet.

Die vorliegende Erfindung nutzt zur Lösung der gestellten Aufgabe den an sich bekannten Formgedächtnis- oder Memory-Effekt aus, der bei thermoplastischen polymeren werkstoffen zu beobachten und beispielsweise in der DE-A 911 541 erläutert ist. Dieser Effekt, der insbesondere bei den sogenannten Schrumpffolien in großem Umfang zur Anwendung kommt, kann im Prinzip wie folgt beschrieben werden:
Ein bei einer Temperatur Tₒ geformtes thermoplastisches polymeres Produkt wird unter Erwärmung auf eine unterhalb Tₒ liegenden Verformungstemperatur Tᵥ verformt - insbesondere gedehnt - und im so verformten Zustand abgekühlt oder - wie man sagt - eingefroren, so daß es in der durch diese Verformung erzeugten Gestalt fixiert wird. Wird das Gebilde danach erneut auf die genannte Verformungstemperatur erwärmt, so erinnert es sich sozusagen an seine ursprüngliche Gestalt und nimmt diese wieder an. Die vorstehend erwähnte Verformung bei der Temperatur Tᵥ wird daher im folgenden als reversible Verformung bezeichnet.

Gemäß der vorliegenden Erfindung unterscheiden sich die vorgeschlagenen Profilleisten von üblichen gattungsgemäßen Profilen dadurch, daß sie ganz oder teilweise aus einem der vorstehend genannten, an sich bekannten thermoplastischen polymeren Werkstoffe mit sogenanntem Formgedächtnis gebildet sind und - wie oben erläutert - nach ihrer ursprünglichen annähernd der bestimmungsgemäßen Gebrauchsform entsprechenden Formgebung erwärmt und ganz oder teilweise reversibel verformt, d.h. durch Abkühlung eingefroren und durch erneute Erwärmung infolge und nach Maßgabe ihres Formgedächtnisses rückformbar sind. Diejenigen Bereiche der Profile, die nicht aus Formgedächtnis-Polymeren gebildet sind, bestehen dabei aus Werkstoffen, die bei der Herstellung gattungsgemäßer Profile üblich sind, insbesondere aus Elastomeren, wie EPDM-Kautschuk.

Besonders vorteilhaft ist es, wenn die erfindungsgemäßen Profile insgesamt aus Formgedächtnis-Polymeren gebildet sind; denn hierdurch sind sie von vornherein an jeder in Betracht kommenden Stelle reversibel verformbar, und ferner bieten sie aufgrund ihres sortenreinen Aufbaus optimale Voraussetzungen für ein problemloses Kunststoff-Recycling.

Mit besonderem Vorteil wird die Erfindung auf den Befestigungsteil der Profile angewandt, wobei dieser durch die sogenannte reversible Verformung in eine Gestalt gebracht ist, in derer sich leicht auf einen Flansch aufstecken oder in eine Nut einstecken läßt. Eine solche Verformung kann beispielsweise bei einem U-förmigen Steckprofil in einer Aufspreizung der U-Schenkel bestehen, und/oder die bei solchen Steckprofilen üblichen Klemmlippen können beiseitegebogen sein. Falls die Forderung nach Kunststoff-Sortenreinheit nicht im Vordergrund steht, kann es vorteilhaft sein, die Verwendung von Formgedächtnis-Polymeren auf sogenannte aktive Bereiche, die durch Koextrusion mit dem übrigen Profil-Werkstoff erzeugt werden, zu beschränken. Solche aktiven Bereich können beispielsweise bei Befestigungsteilen mit U-oder V-förmigem Querschnitt insbesondere an der Basis der U- bzw. V-Schenkel und/oder an den Klemmlippen angeordnet sein.

Nachdem ein erfindungsgemäßes Profil in seiner reversibel verformten, leicht montierbaren Gestalt am bestimmungsgemäßen Montageort angebracht ist, wird es erneut etwa auf die Verformungstemperatur Tᵥ erwärmt und kehrt hierdurch ohne jeglichen weiteren Eingriff selbstständig in die Gestalt seiner ursprünglichen Formgebung zurück, in der es sich kraft- und/oder formschlüssig fest an dem Flansch bzw. in der Nut verklemmt. Die zur erneuten Erwärmung auf die Temperatur Tᵥ erforderliche Energiezuführung kann auf unterschiedliche Weise, insbesondere mittels Heizluft erfolgen. In einer besonders vorteilhaften Ausführungsform der Erfindung ist der verwendete Formgedächtnis-Werkstoff in an sich bekannter Weise durch geeignete Beimengungen elektrisch leitfähig gemacht, so daß er durch Hindurchleiten eines elektrischen Stromes erwärmt werden kann. Derart leitfähig gemachte reversibel verformte Bereiche der erfindungsgemäßen Profile können besonders einfach rückgeformt und damit die Profile auch an schwierig zugänglichen Montageorten in ihrer bestimmungsgemäßen Position fixiert werden.

Die beigefügte Zeichnung erläutert die vorliegende Erfindung anhand von schematisch dargestellten Ausführungsbeispielen, und zwar zeigen
- Fig. 1: ein übliches Dichtprofil mit einem Befestigungsteil und Dichtungsteilen,
- Fig. 2a): einen insgesamt aus einem Formgedächtnis-Polymer gebildeten Befestigungsteil im reversibel verformten Zustand,
- Fig. 2b): einen Befestigungsteil, bei dem nur die Klemmlippen aus einem Formgedächtnis-Polymer gebildet und reversibel verformt sind,
- Fig.3: den Befestigungsteil gemäß Fig. 2a) nach seiner Rückformung,
- Fig.4a) u. 4b): erfindungsgemäße Profile mit aus Formgedächtnis-Polymeren gebildeten aktiven Bereichen in der Gestalt ihrer ursprünglichen Formgebung,
- Fig.5a) u. 5b): dieselben Profile nach ihrer reversiblen Verformung,
- Fig.6a) u. 6b): dieselben Profile nach ihrer Rückformung,
- Fig.7: ein in einer Nut fixiertes erfindungsgemäßes Steckprofil.

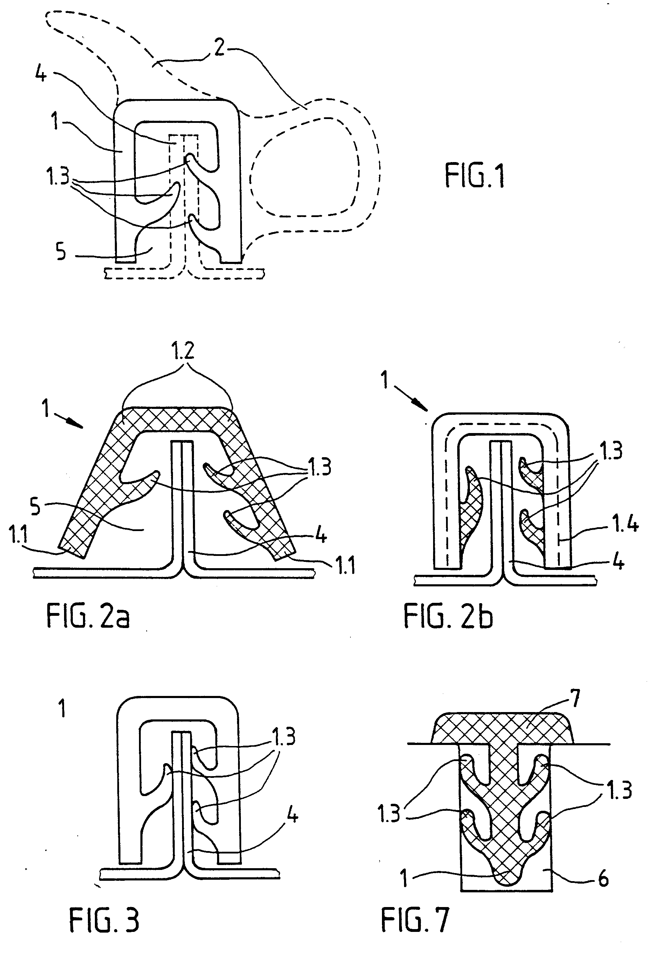

Fig. 1 erläutert den Erfindungsgegenstand anhand eines üblichen Dichtungsprofils, dessen U-förmiger Befestigungsteil 1 mit gestrichelt angedeuteten Dichtungsteilen 2 verbunden ist und auf einen Flansch 4 aufgesteckt und mittels der durch die Klemmlippen 1.3 erzeugten transversalen Klemmkräfte auf diesem fixiert werden kann. Da die Klemmlippen 1.3 zur Erzeugung einen ausreichenden Klemmkraft weit in den Schenkelzwischenraum 5 hineinragen müssen, behindern sie bei bekannten Profilen das Aufstecken auf einen Flansch und machen hohe Aufsteckkräfte erforderlich. Die Figuren 2a und 2b zeigen erfindungsgemäße Befestigungsteile 1, die ursprünglich die in Fig. 1 wiedergegebene Gestalt aufwiesen und nun reversibel verformt sind. Bei dem Befestigungsteil 1 gemäß Fig. 2a, das insgesamt aus Formgedächtnis-Polymer gebildet ist, ist die reversible Verformung jeweils im Bereich der Schenkelbasis 1.2 durchgeführt worden, so daß die Schenkel 1.1 auseinandergespreizt sind und der Schenkelzwischenraum 5 so erweitert ist, daß ein Flansch mühelos in ihn hineingeführt werden kann. Derselbe Effekt wird bei dem Befestigungsteil gemäß Fig. 2b, bei dem eine entsprechende Schenkelspreizung wegen der integrierten Blecheinlage 1.4 nicht möglich ist, dadurch erzielt, daß die aus einem Formgedächtnis-Polymer gebildeten Klemmlippen 1.3, wie dargestellt, reversibel so verformt sind, daß sie den Raum zum mühelosen Einführen des Befestigungsflansches 4 freigeben.
Durch erneute Erwärmung der erfindungsgemäßen Befestigungsteile sowohl gemäß Fig. 2a als auch gemäß Fig. 2b auf die angewandte Verformungstemperatur Tᵥ nehmen beide Ausführungsformen die in Fig. 3 wiedergegebene Gestalt an, in der die Klemmlippen 1.3 durch die ausgelösten Rückformungskräfte gegen den Flansch 4 gepresst sind und diesen fest zwischen sich einklemmen.

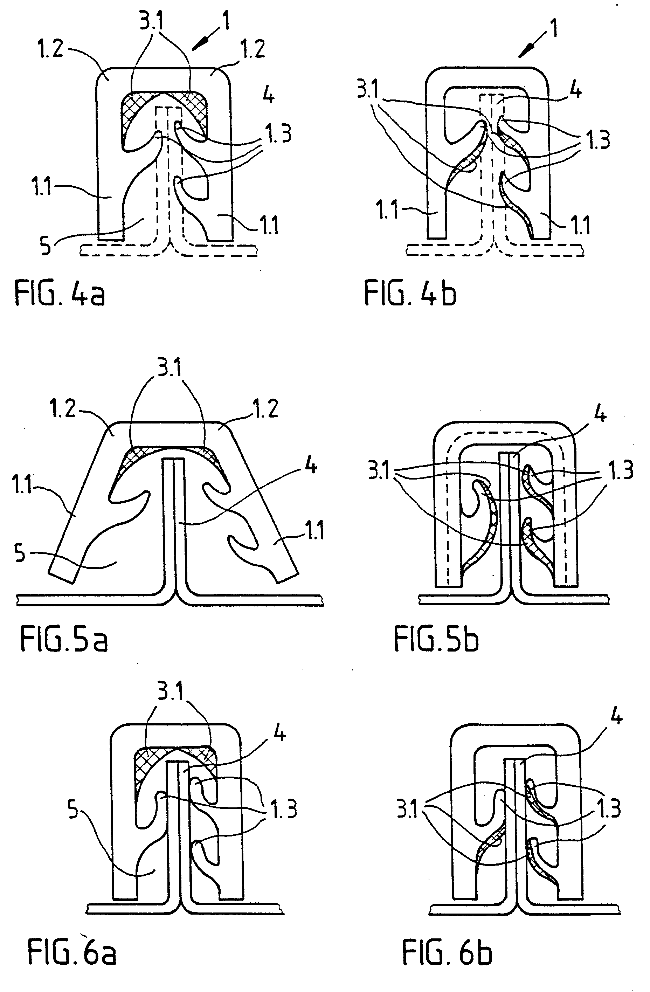

Die Figuren 4a bis 6b verdeutlichen die anloge Wirkungsweise der vorliegenden Erfindung an zwei anderen vorteilhaften Ausführungsformen, bei denen Formgedächtnis-Polymer jeweils nur in aktiven Bereichen 3.1 der Befestigungsteile 1 vorgesehen ist. Die Figuren 5a und 5b zeigen die Befestigungsteile jeweils im reversibel verformten Zustand, in dem sie leicht auf einen Flansch 4 aufgesteckt werden können, und den Figuren 6a und 6b sind sie nach ihrer infolge und nach Maßgabe des Formgedächtnisses der aktiven Bereiche 3.1 erfolgten Rückformung dargestellt.

Fig. 7 zeigt die vorteilhafte Anwendung der vorliegenden Erfindung bei einem in einer Nut fixierbaren Profil, das einen stegartigen Befestigungsteil 1 mit seitlichen Klemmlippen 1.3 aufweist. Anstelle des leistenförmigen Kopfteils 7 können auch Dichtungsteile 2, wie in Fig. 1 angedeutet, vorgesehen sein. Das Steckprofil kann, wie dargestellt, insgesamt aus Formgedächtnis-Polymer gebildet sein, oder die Verwendung von Formgedächtnis-Polymer kann sich analog Fig. 2b auf die Klemmlippen 1.3 oder analog den Figuren 4b, 5b und 6b auf aktive Bereiche 3.1 beschränken.

## Patentansprüche

1. Aus polymeren Werkstoffen gebildetes Dichtungs- oder Deckprofil, das einen auf einen Flansch aufsteckbaren oder in einer Nut einsteckbaren, an dem Flansch bzw. in der Nut durch transversale Klemmkräfte fixierbaren Befestigungsteil aufweist,
**dadurch gekennzeichnet,**
daß es ganz oder teilweise aus einem an sich bekannten thermoplastischen polymeren Werkstoff mit sogenanntem Formgedächtnis besteht und nach seiner ursprünglichen, annähernd der bestimmungsgemäßen Gebrauchsform entsprechenden Formgebung erwärmt und ganz oder teilweise reversibel verformt, d.h. durch Abkühlung eingefroren und durch erneute Erwärmung infolge und nach Maßgabe seines Formgedächtnisses rückformbar ist.

2. Dichtungs- oder Abdeckprofil nach Anspruch 1, dadurch gekennzeichnet, daß der Befestigungsteil (1) ganz oder teilweise aus einem Werkstoff mit sogenanntem Formgedächtnis gebildet, unter Erwärmung in transversaler Richtung verformt und im so verformten Zustand eingefroren und durch erneute Erwärmung infolge und nach Maßgabe seines Formgedächtnisses rückformbar ist.

3. Dichtungsprofil nach Anspruch 1 oder 2, dadurch gekennzeichnet, daß es lippen- und/oder schlauchförmige Dichtungsteile (2) aufweist und daß die Dichtungsteile (2) ganz oder teilweise aus einem polymeren Werkstoff mit sogenanntem Formgedächtnis gebildet, unter Erwärmung in transversaler Richtung verformt und im so verformten Zustand eingefroren und durch erneute Erwärmung infolge und nach Maßgabe ihres Formgedächtnisses rückformbar sind.

4. Profil nach einem der Ansprüche 1 bis 3, dadurch gekennzeichnet, daß es einen Befestigungsteil (1) mit U- oder V-förmigem Querschnitt aufweist, wobei jeweils im Bereich der Basis (1.2) der U- bzw. V-Schenkel (1.1) aktive Bereiche (3) aus einem polymeren Werkstoff mit sogenanntem Formgedächtnis angeordnet sind, die durch transversale Aufweitung bzw. Verengung des Schenkelzwischenraumes (6) reversibel verformt sind.

5. Profil nach einem der Ansprüche 1 bis 4, dadurch gekennzeichnet, daß es einen Befestigungsteil (1) mit seitlich an diesem angeordneten Klemmlippen (1.3) aufweist, an denen aktive Bereiche (3) aus einem polymeren Werkstoff mit sogenanntem Formgedächtnis vorgesehen sind, die entgegen der Richtung der beabsichtigten transversalen Klemmwirkung der Klemmlippen reversibel verformt sind.

6. Profil nach einem der Ansprüche 1 bis 5, dadurch gekennzeichnet, daß seine aus einem polymeren Werkstoff mit sogenanntem Formgedächtnis gebildeten Bereiche in an sich bekannter Weise durch geeignete Beimengungen elektrisch leitfähig gemacht und vorzugsweise mit Anschlußkontakten zum Hindurchleiten eines elektrischen Heizstromes versehen sind.
